# FASCICULE DE BREVET EUROPEEN

(11) **EP 1 897 163 B1**
(45) Date de publication et mention de la délivrance du brevet: **11.09.2019**
(21) Numéro de dépôt: 06778656.6
(22) Date de dépôt: 23.06.2006
(51) Int. Cl.: H01M 8/0273

(54) **JOINT D'ETANCHEITE ET CELLULE DE PILE A COMBUSTIBLE COMPORTANT UN TEL JOINT APPOSE SUR LES PLAQUES BIPOLAIRES**
DICHTUNG UND SELBIGE AN DEN BIPOLARPLATTEN BEFESTIGT UMFASSENDE BRENNSTOFFZELLE
SEAL AND FUEL CELL COMPRISING SAME AFFIXED ON THE BIPOLAR PLATES

(30) Priorité: 28.06.2005 FR 0506558
(43) Date de publication de la demande: 12.03.2008
(73) Titulaire: COMMISSARIAT A L'ENERGIE ATOMIQUE, 75015 Paris (FR); PSA Automobiles SA, 78300 Poissy (FR)
(72) Inventeur: LEMASSON, Damien, F-69100 Villeurbanne (FR); GLIPA, Xavier, F-91190 Gif sur Yvette (FR); ROY, Francis, F-91940 Les Ulis (FR); POIROT-CROUVEZIER, Jean-Philippe, F-38450 Saint-Georges-de-Commiers (FR); LE GALLO, Patrick, F-38560 Jarrie (FR)
(74) Mandataire: Ménès, Catherine
(86) Numéro de dépôt international: PCT/FR2006/001458
(87) Numéro de publication internationale: WO 2007/003742

(56) Documents cités:
- WO-A-92/22096
- US-A- 5 464 700
- US-A1- 2003 091 885
- US-A1- 2003 194 597
- US-A1- 2005 095 490
- PATENT ABSTRACTS OF JAPAN vol. 1995, no. 02, 31 mars 1995 (1995-03-31) & JP 06 325777 A (MITSUBISHI HEAVY IND LTD), 25 novembre 1994 (1994-11-25)
- PATENT ABSTRACTS OF JAPAN vol. 017, no. 698 (E-1481), 20 décembre 1993 (1993-12-20) & JP 05 242897 A (FUJI ELECTRIC CO LTD), 21 septembre 1993 (1993-09-21)

## Description

L'invention concerne une pile à combustible comprenant une plaque bipolaire sur laquelle est apposé un joint d'étanchéité selon la revendication 1.

Une pile à combustible est un dispositif électrochimique qui permet de convertir l'énergie chimique en énergie électrique à partir d'un carburant, généralement l'hydrogène, et d'un comburant, l'oxygène ou un gaz contenant de l'oxygène tel que l'air, le seul produit de la réaction étant l'eau accompagnée d'un dégagement de chaleur et d'une production d'électricité.

Au sein de la pile à combustible, la réaction chimique globale résultant des réactions se produisant aux électrodes est la suivante :

H₂ + ½ O₂ -> H₂O

Une pile à combustible peut être utilisée pour fournir l'énergie électrique à tout dispositif tel que par exemple un ordinateur, un téléphone portable mais elle peut être également utilisée pour assurer la traction d'un véhicule automobile et/ou l'alimentation des dispositifs électriques contenus dans un véhicule.

Une pile à combustible peut être constituée d'une ou de plusieurs cellules.

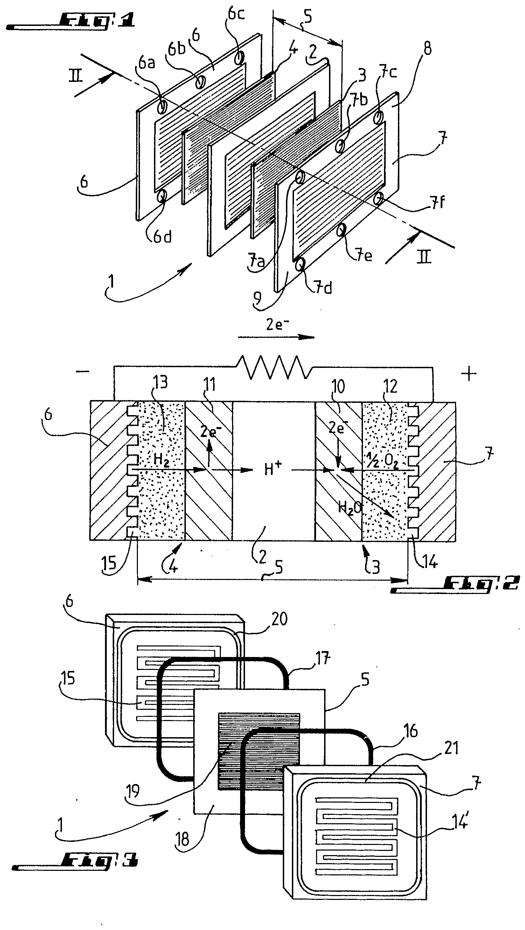

En référence à la figure 1 qui représente une cellule de pile à combustible de l'art antérieur, une telle cellule 1 comporte un électrolyte conducteur protonique 2 qui est pris en sandwich entre deux électrodes poreuses cathodique 3 et anodique 4 et qui assure le transfert protonique entre ces deux électrodes 3, 4.

A cet effet, l'électrolyte 2 peut être une membrane polymère échangeuse de protons d'épaisseur de 20 à 200 µm, la pile résultante étant une pile de type PEMFC (Proton Exchange Membrane Fuel Cell).

L'ensemble constitué par l'électrolyte 2 et les deux électrodes 3,4 forme un d'assemblage membrane électrodes (AME) 5 qui est lui-même pris en sandwich entre des première 6 et deuxième 7 plaques bipolaires qui assurent la collecte du courant, la distribution du comburant et du carburant dans les électrodes et la circulation du fluide caloporteur.

Les plaques bipolaires 6,7 couramment utilisées sont réalisées dans des matériaux offrant de bonnes propriétés de résistance à la corrosion et de conductivité électrique, tels que des matériaux carbonés comme du graphite, du graphite imprégné de polymère ou des feuilles de graphite souple mis en forme par usinage ou par moulage.

Il est également possible, pour réaliser les plaques bipolaires 6,7, d'utiliser des matériaux métalliques tels que des alliages à base de titane, d'aluminium et de fer dont les aciers inoxydables. Dans ce cas, la mise en forme de la plaque bipolaire peut être obtenue par emboutissage ou estampage de feuilles de faible épaisseur.

Afin d'assurer la distribution du comburant, du carburant et du fluide caloporteur dans toutes les cellules constitutives de la pile, la deuxième plaque bipolaire 7 comporte six perçages 7a, 7b, 7c, 7d, 7e, 7f dont trois d'entre eux 7a, 7b, 7c sont régulièrement disposés sur le bord supérieur 8 de cette plaque 7, les trois autres perçages 7d, 7e, 7f étant, de façon symétrique, également régulièrement disposés sur le bord inférieur 9 de cette plaque 7.

La première plaque bipolaire 6 comporte les mêmes perçages disposés aux mêmes endroits que sur la plaque bipolaire 7, la figure 1 ne laissant apparaître que les trois perçages supérieurs 6a, 6b, 6c et un perçage inférieur 6d.

Les perçages 6a, 6b, 6c, 6d de la première plaque bipolaire 6 et les perçages 7a, 7b, 7c, 7d, 7e, 7f de la deuxième plaque bipolaire 7 doivent être alignés pour assurer la circulation des fluides à travers toutes les cellules constitutives de la pile lors de l'assemblage de cette pile.

Au niveau de chacun de ces perçages 7a, 7b, 7c, 7d, 7e, 7f, 6a, 6b, 6c, 6d, un conduit non représenté permet d'alimenter en ou de récupérer le fluide caloporteur, le carburant ou le comburant circulant à la surface de la plaque 6,7 ou dans la plaque 6,7 dans des canaux ou circuits de circulation de fluides prévus à cet effet et qui seront détaillés plus loin.

En référence à la figure 2 qui est une coupe selon la ligne II-II de la figure 1, les électrodes cathodique 3 et anodique 4 comportent chacune une couche active respective 10, 11 qui sont le siège des réactions respectivement cathodique et anodique et une couche de diffusion respective 12, 13 intercalée entre la couche active 10,11 et la plaque bipolaire correspondante 7,6, cette couche de diffusion 12, 13 pouvant être un substrat en papier ou un tissu de carbone.

La couche de diffusion 12,13 assure la diffusion homogène des réactifs tels que l'hydrogène et l'oxygène qui circulent dans les canaux respectifs 14, 15 formés par des rainures réalisées dans les plaques bipolaires respectives 7, 6.

De cette façon, la couche active 11 de l'électrode anodique 4 est alimentée en hydrogène via la couche de diffusion 13 et la réaction qui se produit dans cette couche active 11 est la suivante :

H₂ -> 2e⁻ + 2H⁺ (1)

De la même façon, la couche active 10 de l'électrode cathodique 3 est alimentée en oxygène via la couche de diffusion 12 et la réaction qui se produit au niveau de cette couche active 10 est la suivante :

½ O2 + 2H⁺ + 2e⁻ -> H₂O (2)

Ces réactions sont rendues possibles par la présence de la membrane conductrice 2 qui assure le transfert protonique depuis la couche active 11 de l'anode 4 vers la couche active 10 de la cathode 3.

De part la nature des fluides utilisés et les réactions électrochimiques mises en jeu, l'étanchéité est un point important lors de la conception d'une pile à combustible.

En référence à la figure 3 qui représente une cellule de pile à combustible de l'art antérieur, cette étanchéité peut être obtenue par la présence d'un joint à section transversale circulaire 16, 17 interposé entre les plaques bipolaires respectives 6,7 et l'assemblage membrane électrodes 5 constitué d'une zone active 19, siège des réactions électrochimiques et d'un cadre 18 entourant cette zone active 19.

En référence à la partie anodique de la cellule 1 représentée sur cette figure, lors de l'assemblage de la pile, le joint 17 vient s'encastrer dans une rainure périphérique conjuguée 20 qui entoure les canaux de distribution du réactifs 15 et qui est réalisée dans la plaque bipolaire 6.

Lors de cette même opération d'assemblage, le cadre 18 de l'assemblage 5 vient en appui sur toute la périphérie de la plaque bipolaire 6 et comprime le joint correspondant 16 ce qui permet, de cette façon, que l'étanchéité entre la partie anodique et l'extérieur de la pile soit assurée.

Bien entendu, de façon symétrique dans la partie cathodique de la cellule 1, la plaque bipolaire 7 comporte également une rainure périphérique recevant le joint 17 et entourant les canaux de distribution en comburant de cette plaque 7 qui ne sont ni représentés ni référencés pour des raisons de vue sur cette figure. On comprend donc que la rainure 21 et les canaux de distribution 14' de la plaque bipolaire 7 qui sont référencés et représentés appartiennent à la partie anodique de la cellule voisine à la cellule 1.

Il est également possible de prévoir que la rainure 20 et sa rainure correspondante dans la plaque bipolaire de la partie cathodique soit de forme circulaire et dans ce cas, le joint 16 utilisé est un joint torique.

Selon l'art antérieur, le joint 16 peut également être un joint plat ou sérigraphié et dans ce cas, les pièces de la cellule et en particulier les plaques bipolaires 6,7 sont de forme adaptée.

Il peut également être prévu que le joint soit positionné avant montage sur l'assemblage membranes électrodes 5 au lieu d'être positionné sur la plaque bipolaire, dans ce cas également les pièces constituant la cellules sont adaptées.

Dans le dispositif de l'art antérieur représenté sur la figure 3, l'étanchéité peut ne pas être assurée de façon optimale en raisons notamment de l'écrasement du joint 17 dans la rainure 20.

On connait également le document US5464700, correspondant au préambule de la revendication 1.

Dans ce contexte, l'invention vise notamment un joint d'étanchéité permettant de pallier les inconvénients précités.

A cet effet, la pile à combustible comprend deux plaques bipolaires et un assemblage membrane électrodes pris en sandwich entre ces plaques bipolaires, chaque plaque bipolaire comprenant un cadre périphérique et une surface centrale de de distribution des réactifs, l'assemblage membrane électrodes comportant une zone active ayant une couche de diffusion anodique ou cathodique siège des réactions anodiques et cathodiques et un cadre périphérique, un joint d'étanchéité étant apposé entre une plaque bipolaire et l'assemblage membrane électrodes, ledit joint se présentant sous forme d'une membrane dont le profil correspond au cadre périphérique de la plaque bipolaire et comportant une ouverture centrale coïncidant avec la surface centrale de distribution des réactifs de la plaque bipolaire, caractérisé en ce que le joint comporte une feuillure au niveau du rebord interne d'encadrement de l'ouverture centrale sur laquelle la couche de diffusion anodique ou cathodique de la zone active, siège des réactions anodiques et cathodiques, de l'assemblage membrane électrodes vient au moins en partie en appui lors de l'assemblage de la pile tout en étant également en appui sur la plaque bipolaire au niveau de sa zone centrale ; et en ce que ce joint comporte également une face frontale sur laquelle le cadre périphérique de l'assemblage vient en appui.

Avantageusement, la face du joint d'étanchéité qui est en contact avec la plaque bipolaire 53 comporte au moins un évidement 69 qui coïncide avec une bordure périphérique en relief 47 qui entoure au moins la zone centrale 46 de la plaque bipolaire 22 et qui est réalisée sur la plaque bipolaire 22 de façon à venir s'encastrer dans l' évidement 69 du joint 52 lors de l'assemblage de la pile.

En outre, cette face en contact avec la plaque bipolaire 53 peut comporter au moins un évidement 69 coïncidant avec au moins une bordure périphérique en relief 33a, 35a, 40a, 41a, 23a, 24a, 27a, 28a disposée autour d'au moins une ouverture respective 33, 35, 40, 41, 23, 24, 27, 28 réalisée dans la plaque bipolaire en formant respectivement moyen d'entrée en fluide caloporteur 23, en comburant 33, en carburant 40 ou de sortie en fluide caloporteur 27, en comburant 35, en carburant 41.

Préférentiellement, le joint d'étanchéité est en polyétheréthercétone, en polytétrafluoroéthylène, en vitton ou en silicone renforcé ou non et/ou chargé ou non.

Avantageusement, le joint est moulé ou injecté de façon que les évidements 69 coïncident avec les bordures en relief 47, 33a, 35a, 40a, 41a, 23a, 24a, 27a, 28a de la plaque bipolaire 22.

En outre, le cadre périphérique 76 de l'assemblage membrane électrodes 70 peut comporter des ouvertures 77 correspondant à chacune des ouvertures respectives de la plaque bipolaire 33, 35, 40, 41, 23, 24, 27, 28 et du joint 61, 57, 60, 56, 62, 63, 58, 59 de façon que les ouvertures du cadre périphérique 77, du joint 61, 57, 60, 56, 62, 63, 58, 59 et de la plaque bipolaire 33, 35, 40, 41, 23, 24, 27, 28 coïncident lors de l'assemblage de la pile et de façon que le cadre périphérique 76 vienne en appui sur toute la surface de la face frontale 76 du joint d'étanchéité 52.

De préférence, le joint d'étanchéité 52 est amoviblement posé, collé ou surmoulé sur la plaque bipolaire 22.

L'invention sera mieux comprise et d'autres buts, avantages et caractéristiques de celle-ci apparaîtront plus clairement à la lecture de la description qui suit et qui est faite au regard des dessins annexés qui représentent des exemples non limitatifs de réalisation du dispositif de l'invention et sur lesquels :
- la figure 1 est une vue en perspective éclatée d'une cellule de pile à combustible de l'art antérieur;
- la figure 2 est une vue en coupe selon la ligne II-II de la figure 1;
- la figure 3 est une vue en perspective éclatée d'une cellule de pile à combustible de l'art antérieur;
- la figure 4 est une vue de face de la plaque bipolaire ;
- la figure 5 est une vue de face de la face supérieure du joint d'étanchéité de l'invention;
- la figure 6 est une vue de face de la face inférieure du joint d'étanchéité de l'invention;
- la figure 7 est une vue en coupe de la partie supérieure de la plaque bipolaire qui comporte le joint d'étanchéité de l'invention et qui est assemblée avec l'assemblage membrane électrodes.

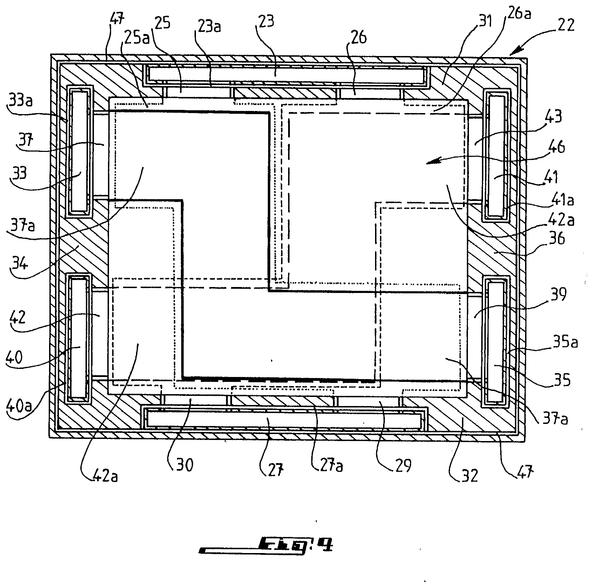

En référence à la figure 4, la plaque bipolaire 22 de l'invention est de forme rectangulaire.

La plaque 22 comporte une fenêtre d'entrée du fluide caloporteur 23 qui s'étend longitudinalement à la périphérie de la plaque 22 sur un premier bord longitudinal 31 et à partir duquel deux canaux d'introduction du fluide caloporteur 25,26 réalisés dans la plaque 22 s'étendent depuis la fenêtre d'entrée 23 jusqu'à la périphérie d'une surface centrale rectangulaire 46 au niveau de laquelle ils pénètrent dans la plaque 22.

Ces canaux 25,26 assurent ainsi l'introduction du fluide caloporteur dans la plaque 22 depuis la fenêtre d'entrée 23, le fluide caloporteur ainsi introduit circulant dans l'épaisseur de la plaque au niveau de la surface centrale 46 dans des circuits de distribution représentés schématiquement et notés 26a et 25a.

La plaque bipolaire 22 comporte également une fenêtre de collecte du fluide caloporteur 27 qui s'étend de façon longitudinale à la périphérie de la plaque 22 sur le deuxième bord longitudinal opposé 32 et à partir de laquelle deux canaux de collecte du fluide caloporteur 29,30 réalisés dans la plaque 22 s'étendent depuis la surface centrale rectangulaire 46 jusqu'à la fenêtre 27 permettant ainsi de collecter le fluide caloporteur ayant circulé dans les canaux de distribution en fluide caloporteur 25a, 26a.

Lorsque la pile est assemblée, les fenêtres d'entrée 23 et de collecte 27 du fluide caloporteur de toutes les cellules constitutives de la pile se superposent en formant un circuit de fluide caloporteur constitué d'un circuit d'entrée en fluide caloporteur et d'un circuit de sortie en fluide caloporteur.

La plaque 22 comporte également une fenêtre d'entrée du comburant 33 disposée à la périphérie de la plaque 22 en s'étendant transversalement sur une première moitié d'un premier bord transversal 34 de la plaque 22 et une fenêtre de sortie du comburant 35 disposée à la périphérie de la plaque 22 en s'étendant transversalement sur une moitié du deuxième bord transversal opposé 36 sensiblement en diagonale de la fenêtre d'entrée du comburant 33.

Un canal d'introduction du comburant 37 est réalisé dans la plaque 22 et s'étend depuis la fenêtre d'entrée du comburant 33 vers la surface centrale rectangulaire 46 de façon que le comburant diffuse depuis ce canal d'introduction 37 vers et jusqu'à un canal de distribution en comburant 37a réalisés dans la plaque bipolaire 22 au niveau de la surface centrale rectangulaire 46 et ouvert vers le haut pour diffuser dans l'électrode cathodique d'un assemblage membrane électrode non représentée sur cette figure et destinée à venir en appui sur la plaque bipolaire et plus particulièrement au niveau de la zone centrale 46 comme il sera décrit plus loin.

Un canal de collecte du comburant 39 est réalisé dans la plaque 22 et s'étend depuis la fenêtre de sortie du comburant 35 vers la surface centrale 46 de façon que le comburant diffuse depuis le canal de distribution 37a vers la fenêtre de sortie 35 en passant dans le canal de collecte 39.

Lorsque la pile est assemblée, la superposition des fenêtres 33 et 35 de toutes les cellules constitutives de la pile forme un circuit de fluide transportant le comburant constitué d'un circuit d'entrée et d'un circuit de sortie en comburant.

De façon symétrique, la plaque bipolaire 22 comporte également une fenêtre d'entrée du carburant 40 s'étendant transversalement sur la deuxième moitié du premier bord transversale 34 et une fenêtre de sortie du carburant 41 s' étendant transversalement sur une moitié du deuxième bord transversale 36 en étant disposée sensiblement en diagonale par rapport à la fenêtre d'entrée 40.

La plaque bipolaire 22 comprend également un canal d'introduction du carburant 42 et un canal de collecte de carburant 43 s'étendant depuis les fenêtres respectives d'entrée 40 et de sortie 41 du carburant vers la surface centrale 46.

La carburant circule ainsi depuis la fenêtre d'entrée 40 jusqu'à la fenêtre de sortie 41 en passant par un canal de distribution en carburant 42a réalisé dans la plaque bipolaire 22, ce canal de distribution 42a étant ouvert vers le bas pour diffuser dans l'électrode cathodique d'un assemblage membrane électrode non représentée sur cette figure et destinée à venir en appui sous la plaque bipolaire.

Lorsque la pile est assemblée, la superposition des fenêtres 40 et 41 de toutes les cellules constitutives de la pile forme un circuit de fluide transportant le comburant constitué d'un circuit d'entrée et d'un circuit de sortie en carburant.

Bien entendu, la disposition des fenêtres de collecte et d'entrée en comburant peut être inversée, par exemple de façon que les fenêtres d'entrée 33 et de collecte 35 en comburant ainsi que les fenêtres d'entrée 40 et de collecte 41 en carburant soit respectivement face à face et non en diagonal.

En référence à la figure 4, la plaque bipolaire 22 comporte une bordure en relief périphérique 47 disposée sur toute la périphérie de la plaque 22 en entourant la fenêtre d'entrée du fluide caloporteur 23, la fenêtre d'entrée du comburant 33, la fenêtre d'entrée du carburant 35, la fenêtre de sortie du fluide caloporteur 27, la fenêtre de sortie du comburant 35, la fenêtre de sortie du carburant 41 et la surface centrale rectangulaire 46 de la plaque bipolaire 22.

Cette bordure en relief permet d'assurer l'étanchéité entre l'intérieur de la pile assemblée et l'extérieur de cette pile.

De plus, la fenêtre d'entrée du fluide caloporteur 23 la fenêtre d'entrée du comburant 33, la fenêtre d'entrée du carburant 40, la fenêtre de sortie du fluide caloporteur 27 la fenêtre de sortie du comburant 35 et la fenêtre de sortie du carburant 41 comportent chacun une bordure en relief respective 23a, 33a, 35a, 27a, 40a, 41a qui assure respectivement l'étanchéité de chacune de ces fenêtres 23,33,40,27,35,41 lorsque la pile est assemblée comme il sera décrit plus loin.

Au niveau de la fenêtre d'entrée 23 et de sortie 27 du fluide caloporteur, la partie de la bordure en relief respective 23a, 27a la plus externe rejoint la bordure en relief périphérique 47 de la plaque 22 alors qu'au niveau des fenêtres d'entrée 33,40 et de sortie 35,41 en, respectivement, comburant et carburant, la bordure périphérique 47 de la plaque bipolaire 22 entoure chaque fenêtre 33,40,41,35 ainsi que sa bordure en relief correspondante 33a, 40a, 41a, 35a.

La bordure périphérique 47 de la plaque bipolaire 22 ainsi que les bordures 23a, 33a, 40a, 27a, 35a, 41a respectives de la fenêtre d'entrée du fluide caloporteur 23 de la fenêtre d'entrée en comburant 33, de la fenêtre d'entrée en carburant 40, de la fenêtre de sortie du fluide caloporteur 27 de la fenêtre de sortie du comburant 35 et de la fenêtre de sortie du carburant 41 peuvent être réalisées par emboutissage ou estampage et présentent une face frontale plane 48 parallèle au plan de la plaque bipolaire 22 en étant relié à celle-ci par des bords 49 droits ou obliques.

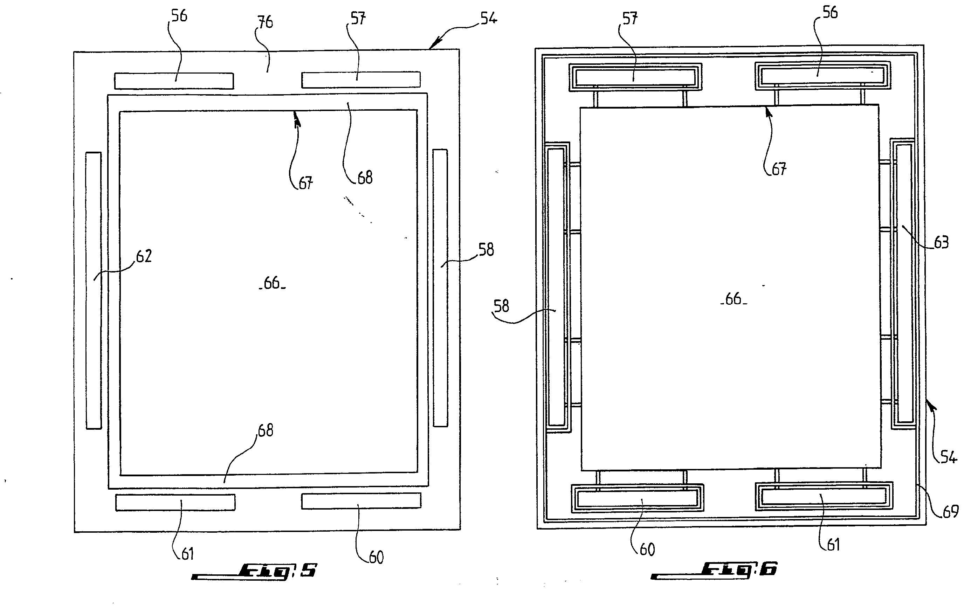

En référence à la figure 5, la face supérieure 51 du joint d'étanchéité 52 de l'invention est lisse et présente le profil du cadre périphérique 50 de la plaque bipolaire 22.

Plus particulièrement, le contour externe 54 du joint 52 est rectangulaire et coïncide avec le contour externe rectangulaire 55 de la plaque bipolaire 22.

Egalement, le joint 52 présente six ouvertures 56,57,58,60,61,62 sous forme de fenêtres coïncidant avec les fenêtres respectives d'entrée et de collecte en fluide caloporteur 23,27, en comburant 33,35 et en carburant 40,41 de la plaque bipolaire 22.

Le joint d'étanchéité 52 comporte également une ouverture centrale 66 sensiblement rectangulaire coïncidant approximativement avec la surface centrale 46 de la plaque bipolaire de façon qu'au moins le canal de distribution 37a de la surface centrale 46 de la plaque bipolaire 22 ne soit pas recouvert par le joint 52 lors de l'apposition de ce joint 52 sur la plaque 22.

Le rebord périphérique interne d'encadrement de l'ouverture centrale 67 définit une feuillure de réception 68 de la couche de diffusion de l'assemblage membrane électrodes lors de l'assemblage de la pile qui sera décrit plus loin.

La largeur de la feuillure 68 est telle que lorsque le joint 52 est assemblé sur la plaque bipolaire 22, cette feuillure 68 recouvre au moins en partie les canaux d'introduction respectivement en fluide caloporteur 25,26, en comburant 37, en carburant 42 et les canaux de collecte respectivement en fluide caloporteur 29,30, en comburant 39 et en carburant 43 depuis les bordures périphériques respectives 23a, 33a, 35a, 27a, 40a, 41a des fenêtres d'entrée en fluide caloporteur 23 en comburant 33, en carburant 35 et de sortie du fluide caloporteur 27 du comburant 35 et du carburant 41 jusqu'à la périphérie de la surface centrale 46.

En référence à la figure 6, la face inférieure 53 du joint d'étanchéité 52 présente le même profil que la face supérieure 51 mais comporte des évidements 69 réalisées dans le joint qui correspondent à la bordure périphérique en relief 47 de la plaque bipolaire 22, aux bordures périphériques en relief 23a, 27a33a, 35a, 40a, 41a, aux canaux d'introduction en relief en fluide caloporteur 25, 26, en comburant 37, en carburant 42 et aux canaux de collecte en relief<"> du fluide caloporteur 29,30, du comburant 39, du carburant 43 et des collecteurs de courant 44a, 44b, 44c, 44d, 44e, 44f, 44g, 44h de façon que cette face inférieur 53 vienne s'encastrer sur la plaque bipolaire 22 en coïncidant avec chaque relief de cette plaque bipolaire 22.

Lors de l'assemblage de la pile, le joint 52 est posé ou collé sur la plaque bipolaire 22.

Ce joint 52 est réalisé par moulage de manière à présenter une géométrie compatible avec les reliefs de la plaque bipolaire 22 comme expliqué précédemment.

La face inférieure 53 est donc le négatif du cadre périphérique 50 de la plaque bipolaire 22 sur laquelle il est en appui lors de l'assemblage de la pile.

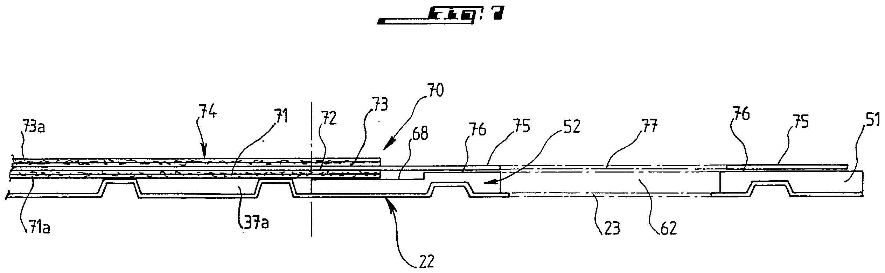

En référence à la figure 7, lors de l'assemblage de la pile, l'assemblage membrane électrodes 70 comprenant une zone active 74 constituée par une électrode cathodique 71, un électrolyte 72, une électrode anodique 73 et des couches de diffusion respectivement anodique 73a et cathodique 71a tels que décrits en référence à l'art antérieur ainsi qu'un cadre périphérique 75 formant extension de l'électrolyte 72 vient en appui sur la plaque bipolaire 22.

Lors de cet assemblage, la couche de diffusion cathodique 71a recouvre toute la surface rectangulaire centrale 46 de la plaque bipolaire 22 ainsi qu'une partie au moins de la feuillure 68 du joint 52.

On peut également prévoir que la couche de diffusion cathodique 71a de l'assemblage membrane électrodes 70 recouvre totalement la feuillure 68.

Comme représenté sur la figure 7, le cadre périphérique 75 de l'assemblage membrane électrodes 70 vient en appui sur la face frontale 76 de la face supérieure 51 du joint 52 et de cette façon, l'étanchéité de la zone active 74 et de chacune des fenêtres respectives d'entrée et de sortie en fluide caloporteur 23, 27 en comburant 33,35 et en carburant 40,41 est assurée.

Ainsi, la feuillure 68 assure à la fois le centrage de l'assemblage membrane électrodes 70 et le blocage de l'éventuel passage de comburant depuis le canal de distribution 37a ou de l'électrode cathodique 71 vers l'extérieur de la cellule de par l'assemblage de la zone active 74 et du cadre périphérique 75 de l'assemblage membrane électrodes 70 relativement à la plaque bipolaire 22 munie de son joint d'étanchéité 52.

En effet, pour assurer au mieux l'étanchéité entre la zone active 74 et l'extérieur de la pile, la hauteur à laquelle se situe le cadre périphérique 75 au sein de l'assemblage 70 est telle que ce cadre 75 repose en appui sur la face frontale 76 du joint 52 sans déformation excessive, ce qui permet d'assurer cette étanchéité entre la zone active 74 de l'assemblage membrane électrodes 70 et l'extérieur de la cellule sans risques de cisaillement de ce cadre périphérique 75.

Naturellement, la plaque bipolaire correspondante du coté anodique comporte également un joint identique à celui décrit précédemment.

Lors de cet assemblage, le joint 52 se déforme de manière élastique sous l'action de l'effort de serrage, cette déformation permettant de compenser les intervalles de tolérances de fabrication de l'ensemble des composants de l'empilement tout en préservant un effort de serrage suffisant pour garantir l'étanchéité.

Les déformations engendrées par cet empilement sont ainsi purement élastiques et aucune plastification des autres composants n'est nécessaire ce qui permet avantageusement de garantir la réparabilité de la pile en utilisant de nouveau certaines pièces telles que les plaques bipolaires sur lesquelles sont monté le joint.

Egalement avantageusement, la mise en forme par emboutissage ou estampage du cadre périphérique 5 de la plaque bipolaire 22 confère à cette plaque une raideur suffisante pour garantir un effort linéique nécessaire à l'étanchéité.

## Revendications

1. Pile à combustible comprenant deux plaques bipolaires (22) et un assemblage membrane électrodes (70) pris en sandwich entre ces plaques bipolaires, chaque plaque bipolaire comprenant un cadre périphérique (50) et une surface centrale de de distribution des réactifs, l'assemblage membrane électrodes (70) comportant une zone active (74) ayant une couche de diffusion anodique ou cathodique (71a, 73a) siège des réactions anodiques et cathodiques et un cadre périphérique (75), un joint d'étanchéité (52) étant apposé entre une plaque bipolaire (22) et l'assemblage membrane électrodes (70), ledit joint (52) se présentant sous forme d'une membrane dont le profil correspond au cadre périphérique (50) de la plaque bipolaire et comportant une ouverture centrale (66) coïncidant avec la surface centrale (46) de distribution des réactifs de la plaque bipolaire (22), **caractérisé en ce que** le joint (52) comporte une feuillure (68) au niveau du rebord interne d'encadrement (67) de l'ouverture centrale sur laquelle la couche de diffusion anodique ou cathodique (71a, 73a) vient au moins en partie en appui lors de l'assemblage de la pile tout en étant également en appui sur la plaque bipolaire (22) au niveau de sa zone centrale (46) ; et **en ce que** ce joint (52) comporte également une face frontale (76) sur laquelle le cadre périphérique (75) de l'assemblage (70) vient en appui.

2. Pile à combustible selon la revendication 1, **caractérisé en ce que** la face du joint d'étanchéité (52) en contact avec la plaque bipolaire présente au moins un évidement (69) qui coïncide avec une bordure périphérique en relief (47), qui entoure au moins la zone centrale (46) de cette plaque bipolaire (22) et qui est réalisée sur la plaque bipolaire (22) de façon à venir s'encastrer dans l'évidement (69) du joint (52) lors de l'assemblage de la pile.

3. Pile à combustible selon la revendication 2, **caractérisé en ce que** le joint d'étanchéité comporte sur sa face en contact avec la plaque bipolaire (53) au moins un évidement (69) coïncidant avec au moins une bordure périphérique en relief (33a, 35a, 40a, 41a, 23a, 24a, 27a, 28a) disposées autour d'au moins une ouverture respective (33, 35, 40, 41, 23, 24, 27, 28) réalisée dans la plaque bipolaire en formant respectivement moyen d'entrée en fluide caloporteur (23), en comburant (33), en carburant (40) et/ou de sortie en fluide caloporteur (27), en comburant (35), en carburant (41).

4. Pile à combustible selon l'une quelconque des revendications 1 à 3, **caractérisé en ce que** la joint d'étanchéité est en polyétheréthercétone, en polytétrafluoroéthylène, en vitton ou en silicone renforcé ou non et/ou chargé ou non.

5. Pile à combustible selon l'une quelconque des revendications 2 à 4, **caractérisé en ce que** le joint d'étanchéité est moulé ou injecté de façon que les évidements (69) coïncident avec les bordures en relief (47, 33a, 35a, 40a, 41a, 23a, 24a, 27a, 28a) de la plaque bipolaire (22).

6. Pile à combustible selon l'une quelconque des revendication précédentes, **caractérisée en ce que** le cadre périphérique (75) de l'assemblage membrane électrodes (70) comporte des ouvertures (77) correspondant à chacune des ouvertures respectives de la plaque bipolaire (33, 35, 40, 41, 23, 24, 27, 28) et du joint (61, 57, 60, 56, 62, 63, 58, 59) de façon que les ouvertures du cadre périphérique (77), du joint (61, 57, 60, 56, 62, 63, 58, 59) et de la plaque bipolaire (33, 35, 40, 41, 23, 24, 27, 28) coïncident lors de l'assemblage de la pile et de façon que le cadre périphérique (76) vienne en appui sur toute la surface de la face frontale (76) du joint d'étanchéité (52).

7. Pile à combustible selon l'une quelconque des revendications précédentes, **caractérisée en ce que** le joint d'étanchéité (52) est amoviblement posé, collé ou surmoulé sur la plaque bipolaire (22).

## Patentansprüche

1. Brennstoffzelle, die zwei Bipolarplatten (22) und eine Elektroden-Membrananordnung (70), die zwischen diesen Bipolarplatten ins Sandwich genommen ist, umfasst, wobei jede Bipolarplatte einen Umfangsrahmen (50) und eine zentrale Oberfläche zum Verteilen von Reagenzien umfasst, wobei die Elektroden-Membrananordnung (70) eine aktive Zone (74) umfasst, die eine anodische oder kathodische Diffusionsschicht (71a, 73a) aufweist, die der Sitz der anodischen und kathodischen Reaktionen ist, und einen Umfangsrahmen (75), wobei eine Dichtung (52) zwischen einer Bipolarplatte (22) und der Elektroden-Membrananordnung (70) angefügt ist, wobei die Dichtung (52) die Form einer Membran aufweist, deren Profil dem Umfangsrahmen (50) der Bipolarplatte entspricht, und eine zentrale Öffnung (66) umfasst, die mit der zentralen Öffnung (46) zur Verteilung der Reagenzien der Bipolarplatte (22) übereinstimmt, **dadurch gekennzeichnet, dass** die Dichtung (52) einen Falz (68) im Bereich der internen Einrahmungkrempe (67) der zentralen Öffnung umfasst, auf der die anodische oder kathodische Diffusionsschicht (71a, 73a) mindestens zum Teil bei dem Zusammenfügen der Zelle zum Aufliegen kommt und gleichzeitig auch auf der Bipolarplatte (22) im Bereich ihrer zentralen Zone (46) in Auflage ist; und dass diese Dichtung (52) auch eine Frontfläche (76) umfasst, auf der der Umfangsrahmen (75) der Anordnung (70) zum Aufliegen kommt.

2. Brennstoffzelle nach Anspruch 1, **dadurch gekennzeichnet, dass** die Fläche der Dichtung (52) in Kontakt mit der Bipolarplatte mindestens eine Aussparung (69) aufweist, die mit einem Umfangsrand in Relief (47) übereinstimmt, der mindestens die zentrale Zone (46) dieser Bipolarplatte (22) umgibt, und die auf der Bipolarplatte (22) derart hergestellt ist, dass sie sich in die Aussparung (69) der Dichtung (52) bei dem Zusammenfügen der Zelle einlässt.

3. Brennstoffzelle nach Anspruch 2, **dadurch gekennzeichnet, dass** die Dichtung auf ihrer Fläche in Kontakt mit der Bipolarplatte (53) mindestens eine Aussparung (69) umfasst, die mit mindestens einem Umfangsrand in Relief (33a, 35a, 40a, 41a, 23a, 24a, 27a, 28a) übereinstimmt, die um mindestens eine jeweilige Öffnung (33, 35, 40, 41, 23, 24, 27, 28), die in der Bipolarplatte hergestellt ist, angeordnet sind, indem jeweils ein Mittel zum Einlassen eines Wärmeübertragungsfluids (23) eines verbrennungsfördernden Mittels (33), eines Kraftstoffs (40) und/oder zum Auslassen eines Wärmeübertragungsfluids (27) eines verbrennungsfördernden Mittels (35), eines Kraftstoffs (41) gebildet wird.

4. Brennstoffzelle nach einem der Ansprüche 1 bis 3, **dadurch gekennzeichnet, dass** die Dichtung aus Polyetheretherketon, aus Polytetrafluorethylen, aus Vitton oder aus Silizium verstärkt oder nicht verstärkt und/oder mit Füllstoff oder ohne besteht.

5. Brennstoffzelle nach einem der Ansprüche 2 bis 4, **dadurch gekennzeichnet, dass** die Dichtung derart geformt oder eingespritzt ist, dass die Aussparungen (69) mit den Rändern in Relief (47, 33a, 35a, 40a, 41a, 23a, 24a, 27a, 28a) der Bipolarplatte (22) übereinstimmen.

6. Brennstoffzelle nach einem der vorstehenden Ansprüche, **dadurch gekennzeichnet, dass** der Umfangsrahmen (75) der Elektroden-Membrananordnung (70) Öffnungen (77) umfasst, die jeder der jeweiligen Öffnungen der Bipolarplatte (33, 35, 40, 41, 23, 24, 27, 28) und der Dichtung (61, 57, 60, 56, 62, 63, 58, 59) derart entsprechen, dass die Öffnungen des Umfangsrahmens (77), der Dichtung (61, 57, 60, 56, 62, 63, 58, 59) und der Bipolarplatte (33, 35, 40, 41, 23, 24, 27, 28) bei dem Zusammenfügen der Zelle übereinstimmen und derart, dass der Umfangsrahmen (76) auf der gesamten Oberfläche der Frontfläche (76) der Dichtung (52) zum Aufliegen kommt.

7. Brennstoffzelle nach einem der vorstehenden Ansprüche, **dadurch gekennzeichnet, dass** die Dichtung (52) abnehmbar auf der Bipolarplatte (22) abgelegt, geklebt oder überspritzt ist.

## Claims

1. A fuel cell including two bipolar plates (22) and an electrode membrane assembly (70) sandwiched between these bipolar plates, each bipolar plate including a peripheral frame (50) and a central area for distribution of the reagents, the electrode membrane assembly (70) comprising an active zone (74) having a layer of anode or cathode diffusion (71a, 73a) which is the site of the anode and cathode reactions, and a peripheral frame (75), a seal (52) being affixed between a bipolar plate (22) and the electrode membrane assembly (70), said seal (52) being in the form of a membrane, the profile of which corresponds to the peripheral frame (50) of the bipolar plate and comprising a central opening (66) coinciding with the central area (46) for distribution of the reagents of the bipolar plate (22), **characterized in that** the seal (52) comprises a rebate (68) at the level of the inner framing rim (67) of the central opening on which the anode or cathode diffusion layer (71a, 73a) at least partly bears on assembling of the cell whilst also bearing on the bipolar plate (22) at the level of its central zone (46); and **in that** this seal (52) also comprises a front face (76) on which the peripheral frame (75) of the assembly (70) bears.

2. The fuel cell according to claim 1, **characterized in that** the face of the seal (52) in contact with the bipolar plate has at least one recess (69) which coincides with a raised peripheral border (47), which surrounds at least the central area (46) of this bipolar plate (22) and which is formed on the bipolar plate (22) so as to come to fit in the recess (69) of the seal (52) on assembling of the cell.

3. The fuel cell according to claim 2, **characterized in that** the seal comprises, on its face in contact with the bipolar plate (53), at least one recess (69) coinciding with at least one raised peripheral border (33a, 35a, 40a, 41a, 23a, 24a, 27a, 28a) arranged around at least one respective opening (33, 35, 40, 41, 23, 24, 27, 28) formed in the bipolar plate, forming respectively inlet means for heat transfer fluid (23), for oxidizer (33), for fuel (40), and/or outlet means for heat transfer fluid (27), for oxidizer (35), for fuel (41).

4. The fuel cell according to any one of claims 1 to 3, **characterized in that** the seal is made of polyetheretherketone, polytetrafluoroethylene, viton or silicone, reinforced or not and/or loaded or not.

5. The fuel cell according to any one of claims 2 to 4, **characterized in that** the seal is moulded or injected so that the recesses (69) coincide with the raised borders (47, 33a, 35a, 40a, 41a, 23a, 24a, 27a, 28a) of the bipolar plate (22).

6. The fuel cell according to any one of the preceding claims, **characterized in that** the peripheral frame (75) of the membrane electrode assembly (70) comprises openings (77) corresponding to each of the respective openings of the bipolar plate (33, 35, 40, 41, 23, 24, 27, 28) and of the seal (61, 57, 60, 56, 62, 63, 58, 59) so that the openings of the peripheral frame (77), of the seal (61, 57, 60, 56, 62, 63, 58, 59) and of the bipolar plate (33, 35, 40, 41, 23, 24, 27, 28) coincide on assembling of the cell and so that the peripheral frame (76) bears on the whole surface of the front face (76) of the seal (52).

7. The fuel cell according to any one of the preceding claims, **characterized in that** the seal (52) is detachably placed, stuck or overmoulded on the bipolar plate (22).
